# EUROPEAN PATENT SPECIFICATION

(11) **EP 1 908 945 B1**
(45) Date of publication and mention of the grant of the patent: **31.03.2010**
(21) Application number: 07018629.1
(22) Date of filing: 21.09.2007
(51) Int. Cl.: F02D 31/00, F02D 41/02, B60W 10/18, B60W 10/06, B60W 30/16

(54) **Control apparatus and method for internal combustion engine**
Vorrichtung und Verfahren zur Steuerung eines Verbrennungsmotors
Appareil et procédé de commande pour moteur à combustion interne

(30) Priority: 02.10.2006 JP 2006271312
(43) Date of publication of application: 09.04.2008
(73) Proprietor: HONDA MOTOR CO., LTD., Tokyo (JP)
(72) Inventor: Okayasu, Kouji, Wako-shi, Saitama, 351-0193 (JP); Nishio, Masaki, Wako-shi, Saitama, 351-0193 (JP)
(74) Representative: Trossin, Hans-Jürgen

(56) References cited:
- EP-A- 1 283 341
- US-A- 4 306 527
- US-A- 4 365 601

## Description

### BACKGROUND OF THE INVENTION

### Field of the Invention:

The present invention relates to a vehicle with a control apparatus according to the preamble of claim 1 and to a method for an internal combustion engine equipped in a driven object according to the preamble of claim 3.

### Description of the Prior Art:

US 4,306,527 A discloses an apparatus and a method for controlling the rotational speed of a combustion engine which drives an automotive vehicle by computing the actual and desired values of the idle rotational speed of the engine, computing a control amount corresponding to the difference between the actual and desired values and controlling the amount of air or the amount of mixture supplied to the engine in accordance with the control amount. The desired value and the upper and lower limit values of the control amount are changed in accordance with a plurality of operating parameters including the condition of a brake switch.

Conventionally, as this type of control apparatus for an internal combustion engine, one described, for example, in Laid-open Japanese Patent Application No. 61-123738 is known. In this Laid-open Japanese Patent Application No. 61-123738, the internal combustion engine is equipped in a vehicle, and comprises a throttle valve and a bypass passage which passes by the throttle valve in its intake pipe, and an electromagnetic valve in the bypass passage for adjusting the amount of intake air. In this control apparatus, the rotational speed of the internal combustion engine is feedback controlled to match with a target rotational speed by controlling the duty ratio of a applied current for determining the opening of the electromagnetic valve. Specifically, a basic value is set for the duty ratio based on the water temperature of the internal combustion engine, and the target rotational speed is set based on this basic value. Then, a correction value is calculated for the duty ratio in accordance with the difference between the rotational speed of the internal combustion engine and the target rotational speed, and the duty ratio is set by adding the calculated correction value to the basic value.

However, the following problems are implied when the conventional control apparatus is applied to an internal combustion engine which is equipped in a vehicle which conducts an idle feedback control during a low speed running and comprises a brake for automatically controlling the distance between vehicles. Specifically, when the vehicle is braked during its running, this results in a lower rotational speed of the internal combustion engine connected to wheels and the like, causing a transition to the idle feedback control. Further, as the braking of the vehicle continues, the rotational speed of the internal combustion engine can drop below the target rotational speed. In this event, in the conventional control apparatus, even if the duty ratio of the electromagnetic valve is calculated so as to match the rotational speed of the internal combustion engine with the target rotational speed, the engine rotational speed does not increase or further drops when the vehicle is continuously braked, resulting in a larger difference with the target rotational speed and an excessively large correction value. Accordingly, if the vehicle is released from the braking in such a situation, the rotational speed of the internal combustion engine suddenly increases (blows up), resulting in exacerbated drivability. Particularly, during a warm-up operation of the internal combustion engine where the target rotational speed is generally set higher, the difference with the target rotational speed tends to increase, making the aforementioned problem prominent.

### SUMMARY OF THE INVENTION

The present invention has been made to solve the problems as mentioned above, and it is an object of the invention to provide a control apparatus and method for an internal combustion engine which is capable of preventing a sudden increase in rotational speed of the internal combustion engine associated with a release of braking when a driven object is braked during the execution of a feedback control, thereby ensuring high drivability.

To achieve the above object, according to a first aspect of the present invention, there is provided vehicle with all features of claim 1. An embodiment of such a vehicle according to the invention comprises a control apparatus for an internal combustion engine, for controlling an internal combustion engine equipped in a driven object as a power source. The control apparatus comprises rotational speed detecting means for detecting a rotational speed of the internal combustion engine; feedback control means for feedback controlling the detected rotational speed of the internal combustion engine so as to match with a predetermined target rotational speed during an idle operation of the internal combustion engine; and braking means for braking the driven object, and is characterized by comprising target rotational speed setting means for setting the detected rotational speed of the internal combustion engine as the target rotational speed at all times when braking is executed by the braking means during the feedback operation, and the rotational speed of the internal combustion engine is less than a predetermined threshold value; and target rotational speed gradually increasing means for gradually increasing the target rotational speed until the target rotational speed reaches the predetermined target rotational speed after the braking by the braking means is released.

According to this control apparatus for an internal combustion engine, during an idle operation of the internal combustion engine equipped in the driven object, the feedback control means feedback controls the detected rotational speed of the internal combustion engine so as to match with the predetermined target rotational speed. During this feedback control, the rotational speed of the internal combustion engine detected at that time is set as the target rotational speed at all times when the driven object is braked by the braking means, and the rotational speed of the internal combustion engine is less than the predetermined threshold value. Thus, even if the engine rotational speed falls in association with the braking of the vehicle, the difference between both can be kept small, and thereby a correction value of the feedback control can be kept small, by matching the target rotational speed with the falling rotational speed of the internal combustion engine. As a result, it is possible to prevent a sudden increase in the engine rotational speed due to the feedback control immediately after the release of the braking of the driven object, thereby making it possible to ensure high drivability.

Further, after the release of the braking, the target rotational speed is gradually increased by the target rotational speed bit-by-bit increasing means. In this way, the essential feedback control can be smoothly returned with the target set at the predetermined target rotational speed while keeping the difference between the rotational speed of the internal combustion engine and the target rotational speed small, and preventing a sudden increase in the rotational speed.

To achieve the above object, according to a second aspect of the present invention, there is provided a control method for an internal combustion engine for controlling an internal combustion engine equipped in a driven object as a power source with all features of claim 3. In an embodiment of such a method according to the present invention a rotational speed of the internal combustion engine is detected, the detected rotational speed of the internal combustion engine is feedback controlled so as to match with a predetermined target rotational speed during an idle operation of the internal combustion engine, and the driven object is braked. The control method is characterized by comprising the steps of setting the detected rotational speed of the internal combustion engine as the target rotational speed at all times when braking is executed during the feedback operation, and the rotational speed of the internal combustion engine is less than a predetermined threshold value; and gradually increasing the target rotational speed until the target rotational speed reaches the predetermined target rotational speed after the breaking is released.

This control method for an internal combustion engine provides the same advantageous effects as described above concerning the control apparatus for an internal combustion engine according to the first aspect of the invention.

In the control apparatus for an internal combustion engine described above, the driven object is a vehicle. The braking means preferably is an automatic braking means for automatically braking the vehicle in order to control a vehicle-to-vehicle distance between the vehicle and another vehicle.

According to this embodiment of the control apparatus for an internal combustion engine, the internal combustion engine is equipped in a vehicle as a driven object. Also, this vehicle is preferably automatically braked irrespective of the operator's will in order to control the vehicle-to-vehicle distance with another vehicle. It is therefore possible to prevent a sudden increase in the rotational speed of the internal combustion engine, not expected by the operator, and a sudden acceleration of the vehicle caused thereby without fail when the braking of the vehicle is released, thereby properly maintaining the vehicle-to-vehicle distance with another vehicle.

Preferably, in the control method for an internal combustion engine described above, the driven object is a vehicle, and the vehicle is automatically braked in order to control a vehicle-to-vehicle distance between the vehicle and another vehicle.

This preferred embodiment of the control method for an internal combustion engine provides the same advantageous effects as described above concerning the control apparatus for an internal combustion engine according to the first aspect of the invention.

### BRIEF DESCRIPTION OF THE DRAWINGS

Fig. 1 is a diagram generally showing the configuration of a control apparatus according to one embodiment together with an internal combustion engine;
Fig. 2 is a flow chart showing an idle feedback control process; and
Fig. 3 is a timing chart showing an exemplary operation resulting form the process of Fig. 2.

### DETAILED DESCRIPTION OF THE EMBODIMENT

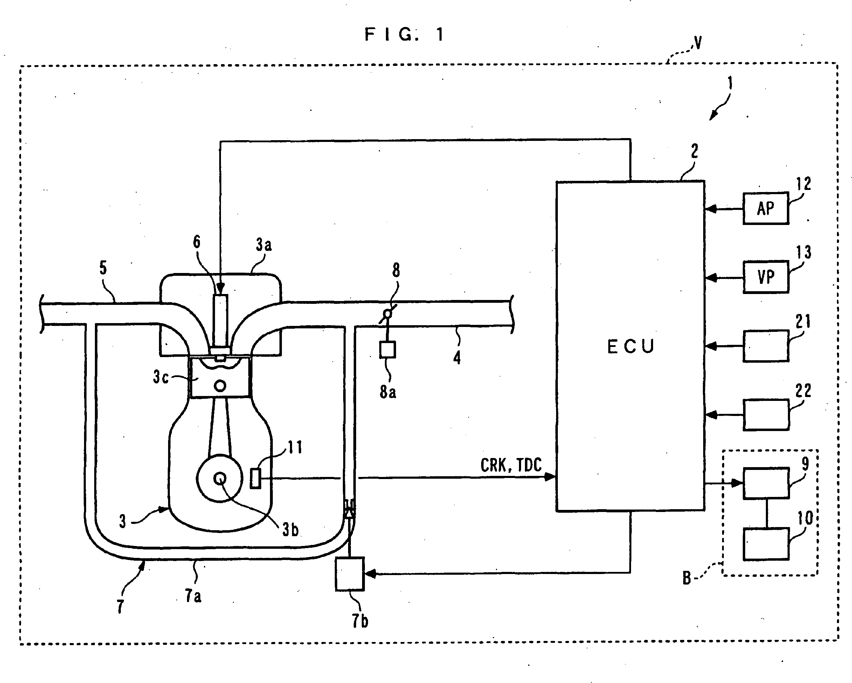

In the following, a preferred embodiment of the present invention will be described in detail. Fig. 1 generally shows the configuration of a control apparatus 1 according to one embodiment of the present invention, and an internal combustion engine (hereinafter called the "engine") 3 to which the control apparatus 1 is applied. The engine 3 is equipped in a vehicle V (driven object) as a power source. Additionally, the vehicle V is provided with a braking device B (braking means) for automatically controlling a vehicle-to-vehicle distance with another vehicle, in addition to an ordinary foot brake. This breaking device B comprises an actuator 9 operated by an ECU 2, a brake 10 driven by the actuator 9, and the like.

The engine 3 is, for example, a four-cylinder (only one of which is shown) Diesel engine, where an intake pipe 4 and an exhaust pipe 5 are respectively connected to a cylinder head 3a of the engine 3, and a fuel injection valve (hereinafter called the "injector") 6 is attached to face a combustion chamber. A fuel injection amount QINJ of the injector 6 is determined in accordance with an engine rotational speed NE, a demanded torque PMCMD, and the like. Also, a valve opening time TINJ is calculated for the injector 6 based on the fuel injection amount QINJ, and an injection pulse signal based thereon is outputted from the ECU 2 to each injector 6.

A crank angle sensor 11 (rotational speed detecting means) is provided on a crank shaft 3b of the engine 3. The crank angle sensor 11 outputs a CRK signal and a TDC signal, both of which are pulse signals, in association with rotations of the crank shaft 3b, to the ECU 2.

The CRK signal is outputted one pulse every predetermined crank angle (for example, 1°), such that the ECU 2 calculates the rotational speed NE of the engine 3 (hereinafter called the "engine rotational speed") based on the CRK signal. The TDC signal is a signal which indicates that the piston 3c is at a predetermined crank angle position near a TDC (top dead center) position of the intake stroke.

The engine 3 is also provided with an EGR device 7 which has an EGR pipe 7a and an EGR control valve 7b. The EGR pipe 7a is connected to the intake pipe 4 and to the exhaust pipe 5 so as to connect both. Through this EGR pipe 7a, part of exhaust gases of the engine 3 is fed back to the intake pipe 4 as an EGR gas, whereby the combustion temperature of the engine 3 falls to reduce NOx in the exhaust gases.

The EGR control valve 7b comprises a linear electromagnetic valve attached to the EGR pipe 7a, the duty ratio of a current supplied thereto is controlled by the ECU 2, and its valve lift amount is controlled in a linear fashion to control the amount of feedback EGR gas (hereinafter called the "EGR amount").

The intake pipe 4 is provided with an intake air throttle valve 8 at a location upstream of a connection with the EGR pipe 7a for adjusting the amount of intake air. The intake air throttle valve 8 is connected to an actuator 8a which comprises, for example, a DC motor. The opening of the intake air throttle valve 8 is variably controlled by controlling the duty ratio of a current supplied to the actuator 8 by the ECU 2.

The ECU 2 is also applied with a detection signal indicative of a manipulation amount AP of an accelerator pedal (not shown) (hereinafter called the "accelerator opening") from an accelerator opening sensor 12, and a detection signal indicative of the speed VP of the vehicle V (hereinafter called the "vehicle speed") from a vehicle speed sensor 13, respectively.

The ECU 2 is also connected to a radar 21 and a vehicle-to-vehicle switch 22. The radar 21 outputs a detection signal indicative of a vehicle-to-vehicle distance DISTV between the vehicle V and another vehicle which is running in front to the ECU 2. The vehicle-to-vehicle switch 22 is manipulated by the operator when he wishes to perform a constant speed/constant distance operation (hereinafter called the "IHCC operation") for automatically maintaining the vehicle speed VP and the vehicle-to-vehicle distance DISTV at a predetermined speed and a predetermined interval, respectively, and outputs an ON signal to the ECU 2 in response to the manipulation. During the IHCC operation with the ON signal outputted, the ECU 2 automatically controls the engine 3 such that the vehicle speed VP reaches a predetermined speed. Also, when the vehicle-to-vehicle distance DISTV is shorter than a predetermined target distance, the ECU 2 calculates the duty ratio supplied to the actuator 9 in accordance with the vehicle-to-vehicle distance DISTV, the vehicle speed VP and the like, and outputs a signal based thereon to the actuator 9, causing the brake 10 to operate to automatically brake the vehicle V. In this regard, the braking of the vehicle V by the brake 10 in the IHCC operation is released when the vehicle-to-vehicle distance DISTV becomes higher than the target distance, or the engine rotational speed NE decreases below a lower limit value NELMT (for example 950 rpm).

The ECU 2 is based on a microcomputer which comprises an I/O interface, a CPU, a RAM, a ROM and the like. The ECU 2 executes the control of the engine 3 including the fuel injection amount QINJ in accordance with a control program and the like stored in the ROM in response to the detection signals from a variety of the aforementioned sensors 11 - 13, the radar 21, and the vehicle-to-vehicle switch 22. The ECU 2 also executes an idle feedback control (hereinafter called the "F/B control") during an idle operation including a low-speed operation by controlling the fuel injection amount QINJ to bring the engine rotational speed NE to a target rotational speed NEIDL. In this embodiment, the ECU 2 implements rotational speed detecting means, feedback control means, braking means, target rotational speed setting means, and target rotational speed gradually increasing means.

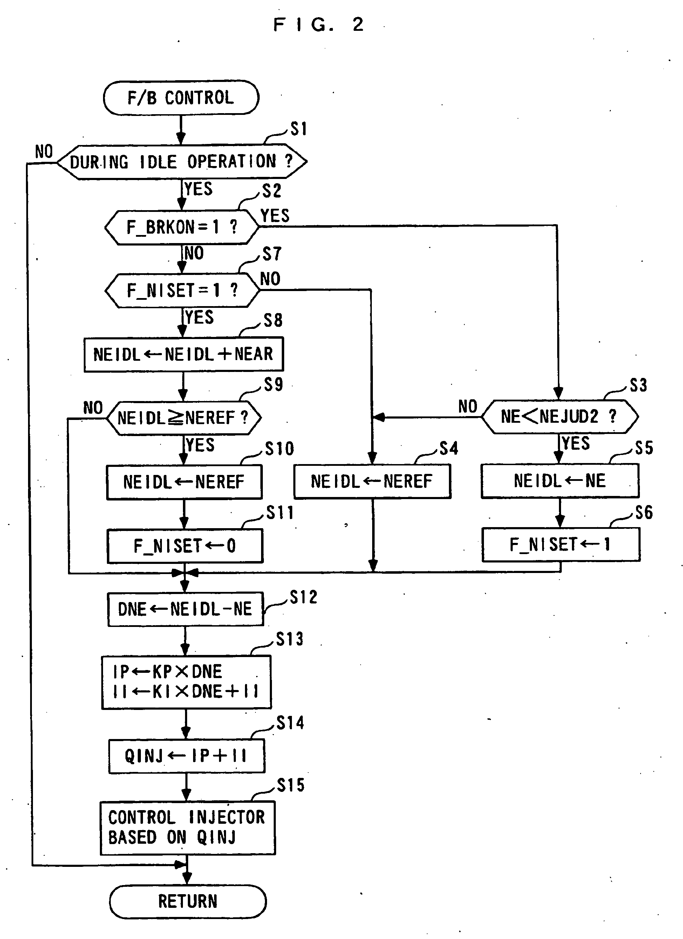

Fig. 2 is a flow chart showing an F/B control process. This process is executed in synchronism with the generation of a TDC signal. First, at step 1 (abbreviated as "S1" in the figures-. The same is applied to the following description), it is determined whether or not the engine 3 is during an idle operation. In this determination, the engine 3 is determined to be in the idle operation when the engine rotational speed NE is equal to or less than a predetermined first threshold value NEJUD1 (for example, 1700 rpm). When the result of this determination is NO, the process is terminated without further actions without conducting the F/B control.

On the other hand, when the result of the determination at step 1 is YES, indicating that the engine 3 is during the idle operation, the target rotational speed NEIDL is set at steps 2 - 11. It is first determined at step 2 whether or not a brake flag F_BRKON is "1." This brake flag F_BRKON is set to "1" when the vehicle V is braked by the brake 10 during the IHCC operation (hereinafter simply called the "braking of the vehicle V"). When the result of the determination at step 2 is YES, it is determined whether or not the engine rotational speed NE is less than a second predetermined threshold value NEJUD2 (for example, 1250 rpm) less than the first threshold value NEJUD1 (step 3). When the result of this determination is NO, the target rotational speed NEIDL is set to a predetermined target rotational speed NEREF (for example, 1400 rpm) (step 4), followed by the process going to step 12, later described.

On the other hand, when the result of the determination at step 3 is YES, indicating that the engine rotational speed NE has fallen below the second threshold value NEJUD2 during the braking of the vehicle V, the target rotational speed NEIDL is set to the engine rotational speed at that time instead of the normal predetermined target rotational speed NEREF (step 5). In addition, a target rotational speed change flag F_NISET is set to "1" for indicating that the target rotational speed NEIDL is being changed (step 6), followed by the process going to step 12.

On the other hand, when the result of the determination at step 2 is NO, it is determined whether or not the target rotational speed change flag F_NISET is "1" (step 7). When the result of this determination is YES, i.e., when the braking of the vehicle V is released while the aforementioned target rotational speedNEIDL is changed, a predetermined value NEAR is added to the target rotational speed NEIDL up to the preceding time, and the resulting sum is set as a current target rotational speed NEIDL (step 8). Next, it is determined whether or not this target rotational speed NEIDL is equal to or more than the predetermined target rotational speed NEREF (step 9). When the result of this determination is NO, the process goes to step 12.

On the other hand, when the result of the determination at step 9 is YES, i.e., when the target rotational speed NEIDL reaches the predetermined target rotational speed NEREF, the target rotational speed NEIDL is set to the predetermined target rotational speed NEREF (step 10) . Then, for indicating that the target rotational speed NEIDL is not changed, the target rotational speed change flag F_NISET is set to "0" (step 11), followed by the process going to step 12.

The execution of step 11 results in a change in the result of determination result at the aforementioned step 7 to NO, in which case the aforementioned step 4 is executed to set the target rotational speed NEIDL to the predetermined target rotational speed NEREF.

Next, from step 12 onward, the fuel injection amount QINJ is PI feedback controlled in accordance with the target rotational speed NEIDL set at the aforementioned step 4, 5, 8 or 10. First, at step 12, a rotational speed difference DNE between the target rotational speed NEIDL and the engine rotational speed NE is calculated (=NEIDL-NE). Next, the rotational speed difference DNE is multiplied by a P-term gain KP to calculates a P-term IP, and the rotational speed difference DNE is multiplied by an I-term gain KI, and the resulting product is added to an I-term II calculated up to the preceding time, thereby calculating the I-term II (step 13). In this regard, the gains KP, KI have been set to predetermined values, respectively.

Next, the calculated P-term IP and I-term II are added to calculate the fuel injection amount QINJ (step 14). Further, the valve opening time TINJ is calculated based on the fuel injection amount QINJ, and an injection pulse signal based thereon is outputted to the injector 6 (step 15), followed by the termination of the process.

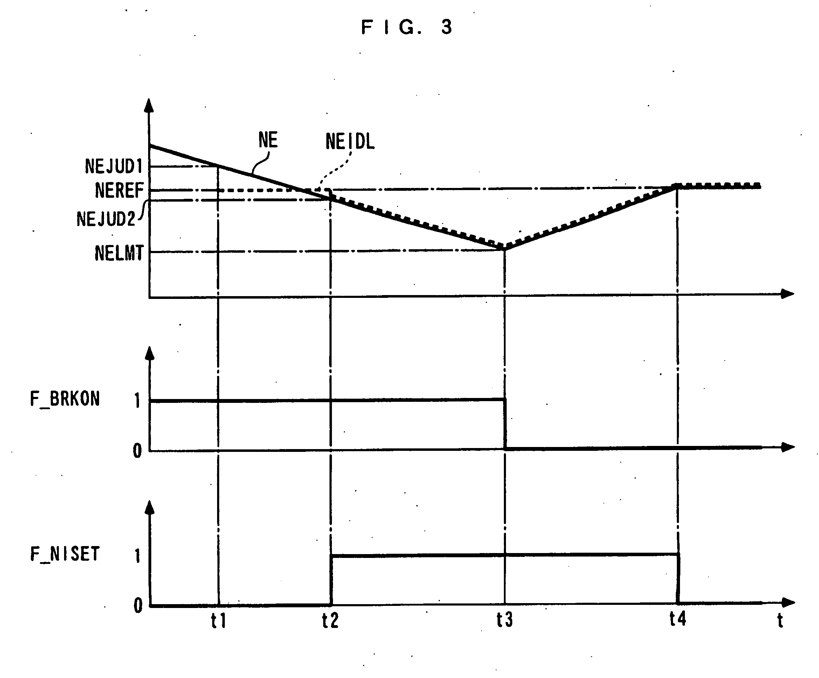

Fig. 3 is a timing chart showing an exemplary operation resulting from the process of Fig. 2. In this example, the vehicle V is braked during an IHCC operation prior to timing t1, and the brake flag F_BRKON is set to "1." Associated with the braking of the vehicle V, the engine rotational speed NE falls down across the first threshold value NEJUD1 (t1), at which the F/B control is started. At the start of the F/B control, the engine rotational speed NE is higher than the second threshold value NEJUD2 (No at step 3), so that the target rotational speed NEIDL is set to the predetermined target rotational speed NEREF (step 4). As the engine rotational speed NE further falls across the second threshold value (t2), the result of the determination at step 3 is YES, whereby the engine rotational speed NE at that time is set as the target rotational speed NEIDL, and the target rotational speed change flag F_NISET is set to "1." By the setting of such a target rotational speed NEIDL, the rotational speed difference DNE is kept small.

As the engine rotational speed NE further falls across the lower limit value NELMT (t3), resulting in a release of the vehicle V from the braking, the brake flag F_BRKON is set to "0," " and the result of the determination at step 2 is NO, whereby the predetermined value NEAR is added to the target rotational speed NEIDL up to the preceding time, and the resulting sum is set as the current target rotational speed NEIDL at step 8. In this way, the target rotational speed NEIDL is set to gradually increase, and the engine rotational speed NE is F/B controlled so as to match with the gradually increasing target rotational speed NEIDL, and gradually increases. Then, when the target rotational speed NEIDL exceeds the predetermined target rotational speed NEREF (t4), the target rotational speed NEIDL is set to the predetermined target rotational speed NEREF (step 10), and the target rotational speed change flag F_NISET is set to "0." Subsequently, the target rotational speed NEIDL is maintained at the predetermined target rotational speed NEREF unless the vehicle V is braked (at and after t4).

As described above, according to this embodiment, when the vehicle V is braked during the IHCC operation, the engine rotational speed at that time is set as the target rotational speed NEIDL at all times when the engine rotational speed NE is less than the second threshold value NEJUD2, so that even if the engine rotational speed falls in association with the braking of the vehicle V, the rotational speed difference DNE can be kept small, and the P-term IP and the I-term II of the F/B control can be kept small. Accordingly, it is possible to prevent a sudden increase in the engine rotational speed NE immediately after the release of the vehicle V, which is not expected by the operator, thereby making it possible to ensure high drivability, prevent sudden acceleration of the vehicle V without fail, and keep the vehicle-to-vehicle distance with another vehicle proper.

Further, after the release of the braking, the target rotational speed NEIDL is gradually increased, so that the essential F/B control can be smoothly returned with the target set at the predetermined target rotational speed NEREF while keeping the rotational speed difference DNE small, and preventing a sudden increase in the engine rotational speed NE.

It should be understood that the present invention is not limited to the described embodiment, but can be practiced in a variety of manners. For example, in the embodiment, the vehicle V is automatically braked during the IHCC operation, but instead of or in addition to this, the operator may manipulate a foot brake. Also, in the embodiment, the fuel injection amount QINJ is used as feedback control means, but other proper means may be used, not limited thereto. For example, the EGR amount may be controlled by the control valve 7b of the EGR device 7, or the intake air amount may be controlled by the actuator 8a of the intake air throttle valve 8.

Further, in the embodiment, the second threshold value NEJUD2 for determining whether or not the target rotational speed NEIDL should be changed, in association with the braking of the vehicle V, is set to a value different from the predetermined target rotational speed NEREF, but may be set to the predetermined target rotational speed NEREF, i.e., an essential predetermined target rotational speed during the idle feedback control. In this way, when the engine rotational speed NE falls below the essential target rotational speed during the idle feedback control, the engine rotational speed NE can be immediately changed to the target rotational speed NEIDL.

Further, the embodiment has shown an example in which a vehicle is a driven object in which an engine is equipped, the present invention can be also applied to other driven objects, for example, aircraft and shipping. Further, while the embodiment has shown an example in which the present invention is applied to a Diesel engine, the present invention is not so limited, but can be applied to a variety of engines other than the diesel engine, including an engine for vessel propeller such as an outboard engine which has a crank shaft arranged in the vertical direction. Otherwise, details in configuration can be modified as appropriate without departing from the spirit and scope of the invention set forth in the appended claims.

A control apparatus and method for an internal combustion engine are provided for preventing a sudden increase in rotational speed of the internal combustion engine associated with a release of braking when a driven object is braked during the execution of a feedback control, thereby ensuring high drivability. The control apparatus controls an internal combustion engine equipped in a driven object as a power source. The control apparatus comprise an ECU for setting the detected rotational speed of said internal combustion engine as the target rotational speed at all times when braking is executed by a brake during the feedback operation, and the rotational speed of said internal combustion engine is less than a predetermined threshold value, and for gradually increasing the target rotational speed until the target rotational speed reaches the predetermined target rotational speed after the breaking by the brake is released.

## Claims

1. A vehicle (v) comprising an internal combustion engine (3) as a power source, braking means (B) for braking said vehicle (V), and a control apparatus (2) for controlling the internal combustion engine (3), said control apparatus (2) comprising:
rotational speed detecting means (11) for detecting a rotational speed (NE) of said internal combustion engine (3); and
feedback control means (2) for feedback controlling the detected rotational speed (NE) of said internal combustion engine (3) so as to match with a predetermined target rotational speed during an idle operation of said internal combustion engine (3);
said control apparatus further **characterized by** comprising:
target rotational speed setting means (2) for setting the detected rotational speed (NE) of said internal combustion engine (3) as the target rotational speed (NEIDL) at all times when braking is executed by said braking means (B) during the feedback operation and the rotational speed (NE) of said internal combustion engine (3) is less than a predetermined threshold value (NEJUD1, NEJUD2); and
target rotational speed gradually increasing means (2) for gradually increasing the target rotational speed (NEIDL) until the target rotational speed (NEIDL) reaches the predetermined target rotational speed (NEREF) after the braking by said braking means (B) is released.

2. A vehicle (V) according to claim 1, wherein:
said braking means (B) is automatic braking means for automatically braking said vehicle (V) in order to control a vehicle-to-vehicle distance (DISTV) between said vehicle (V) and another vehicle.

3. A control method for an internal combustion engine (3) for controlling an internal combustion engine (3) equipped in a driven object (V) as a power source, wherein a rotational speed (NE) of said internal combustion engine (3) is detected, the detected rotational speed (NE) of said internal combustion engine (3) is feedback controlled so as to match with a predetermined target rotational speed (NEIDL) during an idle operation of said internal combustion engine (3), and said driven object (V) is braked,
said control method **characterized by** comprising the steps of:
setting the detected rotational speed (NE) of said internal combustion engine as the target rotational speed (NEIDL) at all times when braking is executed during the feedback operation and the rotational speed (NE) of said internal combustion engine (3) is less than a predetermined threshold value (NEJUD1, NEJUD2); and
gradually increasing the target rotational speed (NEIDL) until the target rotational speed (NEIDL) reaches the predetermined target rotational speed (NEREF) after the braking is released.

4. A control method according to claim 3, wherein:
said driven object (V) is a vehicle (V), and
said vehicle (V) is automatically braked in order to control a vehicle-to-vehicle distance (DISTV) between said vehicle (V) and another vehicle.

## Patentansprüche

1. Fahrzeug (V), umfassend einen Verbrennungsmotor (3) als Antriebsquelle, ein Bremsmittel (B) zum Bremsen des Fahrzeugs (V) sowie eine Steuervorrichtung (2) zum Steuern/Regeln des Verbrennungsmotors (3),
wobei die Steuervorrichtung (2) umfasst:
ein Drehzahlerfassungsmittel (11) zum Erfassen einer Drehzahl (NE) des Verbrennungsmotors (3); und
ein Rückkopplungsregelmittel (2) zum rückkoppelnden Regeln der erfassten Drehzahl (NE) des Verbrennungsmotors (3) derart, dass sie mit einer vorbestimmten Solldrehzahl übereinstimmt, während der Verbrennungsmotor (3) im Leerlaufbetrieb ist;
wobei die Steuervorrichtung ferner **dadurch gekennzeichnet ist, dass** sie umfasst:
ein Solldrehzahlsetzmittel (2) zum Setzen der erfassten Drehzahl (NE) des Verbrennungsmotors (3) als die Solldrehzahl (NEIDL) immer dann, wenn während des Rückkopplungsbetriebs durch das Bremsmittel (B) eine Bremsung ausgeführt wird und die Drehzahl (NE) des Verbrennungsmotors (3) niedriger als ein vorbestimmter Schwellenwert (NEJUD1, NEJUD2) ist; und
ein Solldrehzahl-Allmählich-Erhöhungsmittel (2) zum allmählichen Erhöhen der Solldrehzahl (NEIDL), bis die Solldrehzahl (NEIDL) die vorbestimmte Solldrehzahl (NEREF) erreicht, nachdem die Bremsung durch das Bremsmittel (B) gelöst ist.

2. Fahrzeug (V) nach Anspruch 1, worin:
das Bremsmittel (B) ein automatisches Bremsmittel zum automatischen Bremsen des Fahrzeugs (V) ist, um einen Zwischenfahrzeugabstand (DISTV) zwischen dem Fahrzeug (V) und einem anderen Fahrzeug zu steuern/regeln.

3. Steuerverfahren für einen Verbrennungsmotor (3) zum Steuern/Regeln eines Verbrennungsmotors (3), der in einem angetriebenen Objekt (V) als Antriebsquelle angeordnet ist, worin eine Drehzahl (NE) des Verbrennungsmotors (3) erfasst wird, die erfasste Drehzahl (NE) des Verbrennungsmotors (3) rückkoppelnd derart geregelt wird, dass sie mit einer vorbestimmten Solldrehzahl (NEIDL) übereinstimmt, während der Verbrennungsmotor (3) im Leerlaufbetrieb ist und das angetriebene Objekt (V) gebremst wird,
wobei das Steuerverfahren **dadurch gekennzeichnet ist, dass** es die Schritte aufweist:
Setzen der erfassten Drehzahl (NE) des Verbrennungsmotors als Solldrehzahl (NEIDL) immer dann, wenn während des Rückkopplungsbetriebs eine Bremsung ausgeführt wird und die Drehzahl (NE) des Verbrennungsmotors (3) niedriger als ein vorbestimmter Schwellenwert (NEJUD1, NEJUD2) ist; und
allmähliches Erhöhen der Solldrehzahl (NEIDL), bis die Solldrehzahl (NEIDL) die vorbestimmte Solldrehzahl (NEREF) erreicht, nachdem die Bremsung gelöst ist.

4. Steuerverfahren nach Anspruch 3, worin:
das angetriebene Objekt (V) ein Fahrzeug (V) ist, und
das Fahrzeug (V) automatisch gebremst wird, um einen Zwischenfahrzeugabstand (DISTV) zwischen dem Fahrzeug (V) und einem anderen Fahrzeug zu steuern/zu regeln.

## Revendications

1. Véhicule (V) comprenant un moteur à combustion interne (3) en tant que source de puissance, des moyens de freinage (B) pour freiner ledit véhicule (V), et un appareil de commande (2) pour commander le moteur à combustion interne (3), ledit appareil de commande (2) comprenant :
des moyens de détection de vitesse de rotation (11) pour détecter une vitesse de rotation (NE) dudit moteur de combustion interne (3) ; et
des moyens de contrôle à rétroaction (2) pour contrôler à rétroaction la vitesse de rotation (NE) détectée dudit moteur à combustion interne (3) afin de correspondre à une vitesse de rotation prédéterminée cible pendant un fonctionnement au ralenti dudit moteur à combustion interne (3) ;
ledit appareil de commande étant en outre **caractérisé en ce qu'**il comprend :
des moyens de réglage de vitesse de rotation cible (2) pour régler la vitesse de rotation (NE) détectée dudit moteur à combustion interne (3) en tant que vitesse de rotation cible (NEIDL) à tous moments lorsque le freinage est réalisé par lesdits moyens de freinage (B) pendant l'opération à rétroaction et que la vitesse de rotation (NE) dudit moteur à combustion interne (3) est inférieure à une valeur de seuil prédéterminée (NEJUD1, NEJUD2) ; et
des moyens d'augmentation progressive de vitesse de rotation cible (2) pour augmenter progressivement la vitesse de rotation cible (NEIDL) jusqu'à ce que la vitesse de rotation cible (NEIDL) atteigne la vitesse de rotation cible prédéterminée (NEREF) après avoir relâché le freinage par lesdits moyens de freinage (B).

2. Véhicule (V) selon la revendication 1, dans lequel :
lesdits moyens de freinage (B) sont des moyens de freinage automatique pour freiner automatiquement ledit véhicule (V) afin de contrôler une distance de véhicule à véhicule (DISTV) entre ledit véhicule (V) et un autre véhicule.

3. Procédé de commande pour un moteur à combustion interne (3) pour commander un moteur à combustion interne (3) équipé dans un objet entraîné (V) en tant que source de puissance, dans lequel une vitesse de rotation (NE) dudit moteur à combustion interne (3) est détectée, la vitesse de rotation (NE) détectée dudit moteur à combustion interne (3) est contrôlée à rétroaction afin de correspondre à une vitesse de rotation cible prédéterminée (NEIDL) pendant un fonctionnement au ralenti dudit moteur à combustion interne (3) et que ledit objet entraîné (V) est freiné, ledit procédé de commande étant **caractérisé en ce qu'**il comprend les étapes consistant à :
régler la vitesse de rotation (NE) détectée dudit moteur à combustion interne en tant que vitesse de rotation cible (NEIDL) à tous moments lorsque le freinage est réalisé pendant l'opération à rétroaction, et que la vitesse de rotation (NE) dudit moteur à combustion interne (3) est inférieure à une valeur de seuil prédéterminée (NEJUD1, NEJUD2) ; et
augmenter progressivement la vitesse de rotation cible (NEIDL) jusqu'à ce que la vitesse de rotation cible (NEIDL) atteigne la vitesse de rotation cible (NEREF) prédéterminée après que le freinage a été relâché.

4. Procédé de commande selon la revendication 3, dans lequel :
ledit objet entraîné (V) est un véhicule (V), et
ledit véhicule (V) est freiné automatiquement afin de contrôler une distance de véhicule à véhicule (DISTV) entre ledit véhicule (V) et un autre véhicule.
